# EUROPEAN PATENT APPLICATION

(11) **EP 4 783 334 A1**
(43) Date of publication of application: **29.07.2026**
(21) Application number: 25202705.7
(22) Date of filing: 17.09.2025
(51) Int. Cl.: H01M 50/342, H01M 50/552, H01M 50/593, H01M 50/188, H01M 50/193, H01M 50/148

(54) **SECONDARY BATTERY AND METHOD FOR MANUFACTURING SECONDARY BATTERY**

(30) Priority: 24.01.2025 KR 20250011348
(71) Applicant: SAMSUNG SDI CO., LTD., Yongin-si, Gyeonggi-do 17084 (KR)
(72) Inventor: Kim, Dae Kyu, 17084 Yongin-si, Gyeonggi-do (KR)
(74) Representative: Meissner Bolte Partnerschaft mbB

(57) **Abstract**

A secondary battery includes (10): an electrode assembly (100) comprising a first electrode (110), a second electrode (120), and a separator (130) interposed between the first electrode (110) and the second electrode (120), the first electrode (110), the second electrode (120), and the separator (130) being wound to form the electrode assembly (100); a case (200) having an opening (201) formed on one side and forming a receiving space (210) in which the electrode assembly (100) is accommodated; and a cap assembly (300) coupled to the one side of the case (200) to seal the opening (201), wherein the cap assembly (300) includes: a cap plate (310) coupled to the opening (201) and comprising a terminal hole (311) formed with a step; and a terminal plate (320) coupled to the terminal hole (311) via an insulator part (330) and electrically connected to the first electrode (110), and a height of an upper surface of the cap plate (310) coupled to the opening (201) is a same as a height of an upper surface of the terminal plate (320).

## Description

### BACKGROUND

### 1. Field

The present invention relates to a secondary battery and a method for manufacturing a secondary battery.

Unlike primary batteries that are not designed to be (re)charged, secondary (or rechargeable) batteries are batteries that are designed to be repeatedly discharged and recharged without damaging the battery. Low-capacity secondary batteries may be used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be used in the form of a single cell or multiple electrically connected cells, depending on the type of electronic device in which the secondary battery is used. For example, a small device such as a mobile phone may operate for a certain period of time with the output and capacity provided by a single secondary battery, whereas if a larger output and capacity is required, for example, in an electric vehicle, a battery pack formed by connecting a plurality of secondary batteries in series, in parallel, or in series-parallel may be used.

In this case, an external tab that is connected to an external secondary battery is welded to an upper surface of a terminal plate of the secondary battery and to an upper surface of a cap plate of a case. However, because there is an overall height difference between the upper surface of the terminal plate and the upper surface of the cap plate of the case, a difference in height may occur at the weld points, creating difficulties in connecting secondary batteries.

Lithium ion secondary batteries may be used as one type of secondary battery. If a lithium ion secondary battery is left at a high temperature for a prolonged period of time or is charged or discharged at a high current, an internal gas may be generated due to cell degradation or the like. In a lithium ion secondary battery, as the can's internal pressure increases due to the generated internal gas, there is a risk of ignition caused by damage to the internal electrode assembly. In this regard, various efforts have been made to suppress the melting of internal components of a secondary battery or to prevent or reduce ignition caused by damage to internal components.

The above information disclosed in this Background section is only for enhancement of understanding of the background and therefore the information discussed in this Background section does not necessarily constitute prior art.

### SUMMARY

Aspects of the present invention include a secondary battery and a method for manufacturing the secondary battery to solve the above-described problems.

However, the characteristics of embodiments according to the present invention are not limited to the above characteristics, and other characteristics not mentioned herein, and aspects and features of embodiments according to the present invention that would address such problems, will be more clearly understood by those skilled in the art from the description of the present invention below.

According to the present invention a secondary battery includes an electrode assembly including a first electrode, a second electrode, and a separator interposed between the first electrode and the second electrode, the first electrode, the second electrode, and the separator being wound to form the electrode assembly, a case having an opening formed on one side and forming a receiving space in which the electrode assembly is accommodated, and a cap assembly coupled to the one side of the case to seal the opening, wherein the cap assembly may include a cap plate coupled to the opening and including a terminal hole formed with a step, and a terminal plate coupled to the terminal hole via an insulator part and electrically connected to the first electrode, and a height of an upper surface of the cap plate coupled to the opening is the same as a height of an upper surface of the terminal plate.

According to some embodiments, the terminal plate may include a stepped portion in contact with the insulator part and formed along a perimeter of an outer peripheral surface so as to correspond to the step of the terminal hole.

According to some embodiments, the insulator part may be press-fitted between the terminal hole and the stepped portion so as to be fixed in place.

According to some embodiments, the insulator part may be located between the cap plate and the terminal plate so as to seal the receiving space.

According to some embodiments, the terminal hole may be inclined radially inward or outward of the case.

According to some embodiments, the stepped portion may be inclined radially inward or outward of the case.

According to some embodiments, if the insulator part seals the receiving space and an internal pressure of the receiving space is greater than or equal to a predetermined value, at least a portion of the insulator part may be released from contact with the terminal hole and the stepped portion.

According to some embodiments, a recessed depth of the step of the terminal hole and a recessed depth of the stepped portion may be greater than or equal to 50% and less than or equal to 80% of a thickness of the terminal plate.

According to some embodiments, the insulator part may include an insulating member contacting the terminal hole and the stepped portion, and a metal member surrounded by the insulating member so that an upper surface of the metal member is exposed externally.

According to some embodiments, a height of an upper surface of the cap plate coupled to the opening, a height of an upper surface of the metal member, and a height of an upper surface of the terminal plate may be the same.

According to some embodiments, the metal member may be formed of a ring shape extending in a circumferential direction of the insulating member.

According to some embodiments, the insulating member may include at least one selected from the group consisting of polypropylene (PP), polyethylene (PE), polybutylene terephthalate (PBT), and mixtures thereof.

According to the present invention a method of manufacturing a secondary battery includes preparing an electrode assembly by winding a first electrode, a second electrode, and a separator interposed between the first electrode and the second electrode, accommodating the electrode assembly in a case having an opening formed on one side, preparing a cap assembly by coupling, via an insulator part, a cap plate may include a terminal hole formed with a step and a terminal plate electrically connected to the first electrode, and coupling the cap assembly to the one side of the case so that a height of an upper surface of the cap plate coupled to the opening is the same as a height of an upper surface of the terminal plate.

According to some embodiments, the terminal plate may include a stepped portion in contact with the insulator part and formed along a perimeter of an outer peripheral surface so as to correspond to the step of the terminal hole.

According to some embodiments, preparing the cap assembly may include press-fitting and fixing the insulator part between the terminal hole and the stepped portion.

According to some embodiments, coupling the cap assembly may include locating the insulator part between the cap plate and the terminal plate so as to seal the receiving space.

According to some embodiments, the method of manufacturing a secondary battery may further include, after coupling the cap assembly, releasing at least a portion of the insulator part from contact with the terminal hole and the stepped portion if the insulator part seals the receiving space and an internal pressure of the receiving space is greater than or equal to a predetermined value.

According to some embodiments, the insulator part may include an insulating member contacting the terminal hole and the stepped portion, and a metal member surrounded by the insulating member so that an upper surface of the metal member is exposed externally.

According to some embodiments, coupling the cap assembly may include coupling the cap plate to the opening so that a height of an upper surface of the cap plate, a height of an upper surface of the metal member, and a height of an upper surface of the terminal plate are the same.

According to some embodiments, preparing the cap assembly may include, with the insulating member in contact with the terminal hole and the stepped portion, pressing an upper surface of the metal member to compress the insulating member toward the electrode assembly.

According to some embodiments of the present invention, because the height of an upper surface of the cap plate and the height of an upper surface of the terminal plate may be the same, any overall height difference of the secondary battery can be eliminated. Accordingly, when a plurality of secondary batteries are welded for connection, the weld heights between adjacent secondary batteries are the same, thereby ensuring weldability and reducing the possibility of poor contact.

According to some embodiments of the present invention, if the internal pressure of the case increases, when the insulator part is released from contact with the terminal hole and the stepped portion, the insulator part may perform a vent function. Through this, when thermal runaway of the secondary battery occurs, gas inside the receiving space may be discharged, thereby relatively improving safety.

According to some embodiments of the present invention, in a secondary battery, it may be possible to relatively simplify the multi-layer cap assembly structure to a single-layer structure of a cap plate and a terminal plate coupled via an insulator part, thereby reducing the thickness of the cap assembly. As a result, the volume of the electrode assembly accommodated inside a case of the same size can be increased, and the energy density of the secondary battery can be increased.

According to some embodiments of the present invention, by adjusting the shape of the terminal hole and the stepped portion, the vent fracture pressure of the insulator part may be relatively easily set.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.
FIG. 1 illustrates a perspective view of a secondary battery according to some embodiments of the present invention.
FIG. 2 illustrates an exploded perspective view of a secondary battery according to some embodiments of the present invention.
FIG. 3 is a cross-sectional view of a cap assembly according to a comparative example.
FIG. 4 illustrates a cross-sectional view of a secondary battery according to some embodiments of the present invention.
FIG. 5 illustrates a perspective view of a cap assembly according to some embodiments of the present invention.
FIG. 6 is a diagram illustrating a cross-section obtained by cutting the cap assembly of FIG. 5.
FIG. 7 is a view of the cap assembly of FIG. 5 as seen from a lower side.
FIG. 8 is a diagram illustrating directions in which internal pressure of a receiving space acts in a cross-sectional view of a secondary battery according to some embodiments of the present invention.
FIG. 9 is a diagram illustrating a state in which an insulator part begins to be released from contact with the terminal hole and the stepped portion in the state of FIG. 8.
FIG. 10 is a diagram illustrating a state in which, from the state of FIG. 9, the terminal plate is completely released from coupling with the cap plate.
FIG. 11 is a diagram illustrating a state before an insulator part is seated in a terminal hole and a stepped portion according to some embodiments of the present invention.
FIG. 12 is a diagram illustrating a state after the insulator part is seated in the terminal hole and the stepped portion of FIG. 11.
FIG. 13 is a diagram illustrating a state before an insulator part is seated in a terminal hole and a stepped portion according to some embodiments of the present invention.
FIG. 14 is a diagram illustrating a state after the insulator part is seated in the terminal hole and the stepped portion of FIG. 13.
FIG. 15 is a diagram illustrating a terminal hole and a stepped portion according to some embodiments of the present invention.
FIG. 16 is a partial perspective view of a secondary battery to which the stepped portion of the embodiments of FIG. 15 is applied.
FIG. 17 is a flowchart illustrating a method of manufacturing a secondary battery according to some embodiments of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be arranged in contact with the upper (or lower) surface of the element, and another element may also be interposed between the element and the arbitrary element located on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present invention and is not intended to be limiting of the present invention.

In the present invention, the sizes and relative sizes of regions shown in the drawings may be exaggerated for clarity of explanation. That is, the sizes shown in the drawings are only for the sake of understanding and are not limited thereto. Also, throughout the entire specification, the same reference numerals refer to the same components.

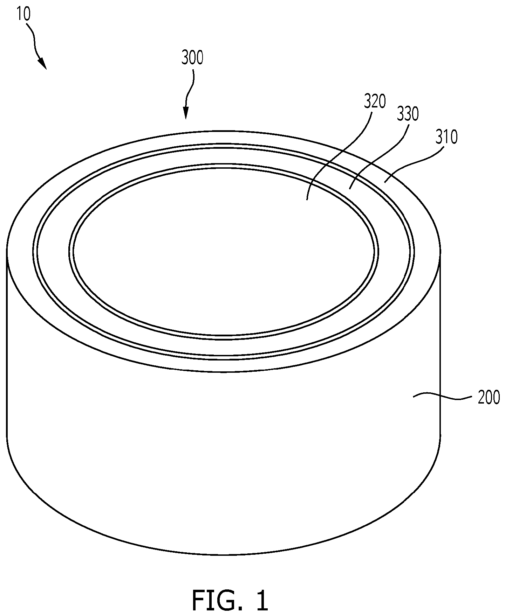

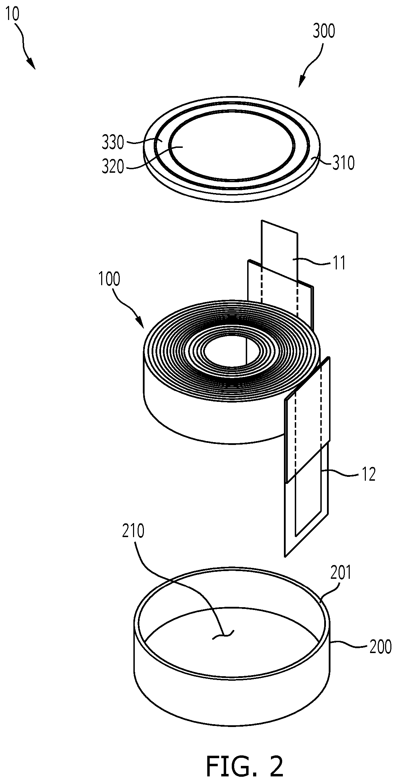

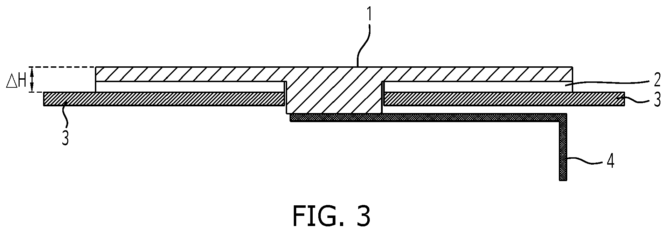

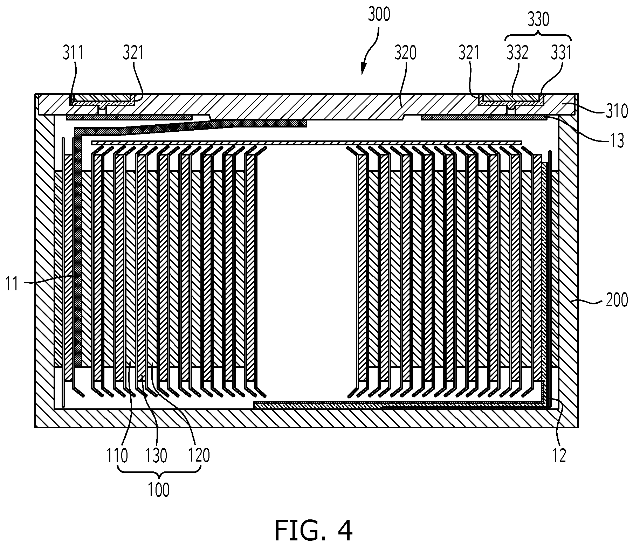

FIG. 1 is a perspective view of a secondary battery according to some embodiments of the present invention, FIG. 2 is an exploded perspective view of a secondary battery according to some embodiments of the present invention, FIG. 3 is a cross-sectional view of a cap assembly according to a comparative example, and FIG. 4 is a cross-sectional view of a secondary battery according to some embodiments of the present invention.

As illustrated in FIGS. 1, 2, and 4, a secondary battery 10 includes an electrode assembly 100, a case 200, and a cap assembly 300. According to some embodiments, the secondary battery 10 may be a coin-type or button-type secondary battery. For example, the secondary battery 10 may be cylindrical, but the shape of the secondary battery 10 is not limited thereto.

The electrode assembly 100 includes a first electrode 110, a second electrode 120, and a separator 130. The electrode assembly 100 is configured by winding the first electrode 110, the second electrode 120, and the separator 130 located between the first electrode 110 and the second electrode 120. By being wound, the electrode assembly 100 may form a wound core and may include a hole in the wound core.

The first electrode 110 may include a first substrate and a first active material layer located on the first substrate. A first electrode tab 11 may extend outward from a first non-coating portion of the first substrate, where the first active material layer is not located. The first electrode tab 11 may be electrically connected to the cap assembly 300. According to some embodiments, the first electrode tab 11 may be a positive electrode tab. The first electrode tab 11 may be coupled to the first electrode 110.

The second electrode 120 may include a second substrate and a second active material layer located on the second substrate. A second electrode tab 12 may extend outward from a second non-coating portion of the second substrate, where the second active material layer is not located, and the second electrode tab 12 may be electrically connected to an inner lower surface of the case 200. According to some embodiments, the second electrode tab 12 may be a negative electrode tab. The second electrode tab 12 may be coupled to the second electrode 120. The first electrode tab 11 and the second electrode tab 12 may extend outwardly in mutually opposite directions from the first electrode 110 and the second electrode 120, respectively.

The first electrode 110 may function as a positive electrode. The positive electrode substrate may be composed of an aluminum foil, and the positive electrode active material may, for example, include a transition metal oxide.

The positive electrode active material may include a compound (lithiated intercalation compound) that is capable of intercalating and deintercalating lithium. For example, at least one of a composite oxide of lithium or a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA₁-_{b}X_{b}O₂-_{c}Dₒ (0.90≤a≤1.8, 0≤b≤0.5, and 0≤c≤0.05); LiₐMn₂-_{b}X_{b}O₄-_{c}D_{c} (0.90≤a≤1.8, 0≤b≤0.5, and 0≤c≤0.05); LiₐNi_{1-b}-_{c}CO_{b}X_{c}O_{2-α}D_{α} (0.90≤a≤1.8, 0≤b≤0.5, 0≤c≤0.5, and O<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0 ≤b≤0.9, 0≤c≤0.5, 0≤d≤0.5, and 0≤e≤0.1); LiₐNiG_{b}O₂ (0.90≤a≤1.8 and 0.001 ≤ b<0.1); LiₐCoG_{b}O₂ (0.90≤a≤1.8 and 0.001 ≤b≤0.1); LiₐMn₁-_{b}G_{b}O₂ (0.90≤a≤1.8 and 0.001 ≤b≤0.1); LiₐMn₂G_{b}O₄ (0.90≤a≤ 1.8 and 0.001 ≤b≤ 0.1); LiₐMn_{1-g}G_{g}PO₄ (0.90≤a≤1.8 and 0≤g≤0.5); Li(_{3-f)}Fe₂(PO₄)₃ (0≤f≤2); or LiₐFePO₄(0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to 80 mol% (or about 80 mol%), greater than or equal to 85 mol% (or about 85 mol%), greater than or equal to 90 mol% (or about 90 mol%), greater than or equal to 91 mol% (or about 91 mol%), or greater than or equal to 94 mol% (or about 94 mol%) and less than or equal to 99 mol% (or about 99 mol%) based on 100 mol% of the metal excluding lithium in the lithium transition metal composite oxide. The high-nickel-based positive electrode active material may be capable of realizing high capacity and can be applied to a high-capacity, high-density rechargeable lithium battery.

The second electrode 120 may function as a negative electrode. For example, the negative electrode substrate may be composed of a copper foil or a nickel foil, and the negative electrode active material may, for example, include graphite.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The separator 130 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

According to some embodiments, each of the first electrode tab 11 and the second electrode tab 12 may be covered with a cover tape. The cover tape may include an insulating material. The insulating material may provide electrical insulation so that current does not flow therethrough. By virtue of the cover tape, a short circuit that may occur between the first electrode tab 11 or the second electrode tab 12 and surrounding conductive components may be prevented or reduced.

The first electrode tab 11 may protrude to one side of the electrode assembly 100. Within the case 200 in which the electrode assembly 100 is accommodated and the cap assembly 300 is coupled, the first electrode tab 11 may be bent beneath the terminal plate 320. An insulator washer 13 may be located between the first electrode tab 11 and the cap assembly 300. The insulator washer 13 may include an insulating material.

According to some embodiments, the second electrode tab 12 may protrude to an opposite side of the electrode assembly 100 from the direction in which the first electrode tab 11 protrudes. The second electrode tab 12 may be bent along a bottom portion of the case 200. According to some embodiments, an insulator washer may be located between the electrode assembly 100 and the second electrode tab 12 so as to prevent or reduce a short circuit between the second electrode tab 12 and the electrode assembly 100.

For explanatory purposes, the secondary battery 10 is illustrated to appear in the form of a coin-type secondary battery, but the scope of embodiments according to the present invention is not limited thereto. The secondary battery 10 of the present invention is not limited to a coin-type secondary battery, and may include any shaped secondary battery such as a prismatic secondary battery, a pouch-type secondary battery, or a cylindrical secondary battery.

The case 200 has an opening 201 formed on one side and a receiving space 210 in which the electrode assembly 100 is accommodated. According to some embodiments, the case 200 may have the opening 201 formed on one side to accommodate the electrode assembly 100. The case 200 may accommodate the electrode assembly 100 and an electrolyte, and together with the cap assembly 300, may form the outer shape of the secondary battery 10. The case 200 may include a substantially cylindrical sidewall portion and a bottom portion connected to one side of the sidewall portion. However, the shape or structure of the case 200 is not limited thereto; the case 200 may be formed in various shapes, such as a circular shape or a pouch shape. Further, the case 200 may be composed of a metal such as stainless steel or steel plated with nickel, or a laminate film or plastic forming a pouch.

The case 200 may accommodate the electrode assembly 100. The electrode assembly 100 may be inserted through the opening 201 formed on one side of the case 200. Thereafter, the opening 201 of the case 200 may be sealed by the cap assembly 300.

The cap assembly 300 is coupled to one side of the case 200. The cap assembly 300 seals the opening 201 by being coupled to one side of the case 200. For example, the cap assembly 300 may be coupled to the region of the case 200 that contacts or engages it by welding.

According to some embodiments, the cap assembly 300 includes a cap plate 310 and a terminal plate 320 that are coupled via an insulator part. An insulator part 330 may have an adhesive property that enables coupling the cap plate 310 and the terminal plate 320. For example, the insulator part 330 may seal the space between the cap plate 310 and the terminal plate 320.

The cap plate 310 is coupled to the opening 201. For example, the cap plate 310 may be coupled by welding to the opening 201. An outer peripheral surface of the cap plate 310 may be coupled to an inner peripheral surface of the case 200. For example, the cap plate 310 may be in the shape of a disk or ring with a center hole. The cap plate 310 may include a terminal hole 311 that is formed with a step. At the center of the cap plate 310, the terminal plate 320 may be arranged via the insulator part 330 to form a single-layer cap assembly 300.

The terminal plate 320 is coupled to the terminal hole 311 via the insulator part 330. The terminal plate 320 may be electrically connected to the first electrode 110. According to some embodiments, the terminal plate 320 may be electrically connected to the first electrode tab 11. The first electrode tab 11 may be connected to a lower surface of the terminal plate 320.

The terminal plate 320 may include a metal material. For example, the terminal plate 320 may be formed of aluminum (Al). However, the material of the terminal plate 320 in the present invention is not limited thereto, and another suitable conductive material may be used. The first electrode tab 11 may be coupled to the terminal plate 320 inside the case 200. For example, the first electrode tab 11 may be welded to the terminal plate 320 inside the case 200 to be electrically connected.

According to some embodiments, the terminal plate 320 may include a stepped portion 321 that contacts the insulator part 330. The stepped portion 321 may be formed along a perimeter of an outer peripheral surface of the terminal plate 320 so as to correspond to the step of the terminal hole 311. According to some embodiments, the insulator part 330 may be press-fitted and fixed between the terminal hole 311 and the stepped portion 321. The insulator part 330 may be located between the cap plate 310 and the terminal plate 320 so as to seal the receiving space 210.

The height of the upper surface of the cap plate 310 coupled to the opening 201 is the same as the height of the upper surface of the terminal plate 320. When the height of the upper surface of the cap plate 310 and the height of the upper surface of the terminal plate 320 are the same, where multiple secondary batteries 10 are welded via external tabs for electrical connection, weldability between adjacent secondary batteries 10 is ensured while reducing the possibility of poor contact.

According to the comparative example illustrated in FIG. 3, the cap assembly includes a terminal plate (1) made of aluminum (Al), a cap plate (3) made of stainless steel, and an insulating layer (2) interposed between the terminal plate (1) and the cap plate (3) for insulation. An electrode tab (4) is coupled to the lower surface of the terminal plate (1). In the cap assembly of the comparative example, there is a height difference (ΔH) between the upper surface of the cap plate (3) and the upper surface of the terminal plate (1).

According to the comparative example, when a plurality of secondary batteries are welded via external tabs for electrical connection, weld difficulty may arise due to the difference in weld position between adjacent secondary batteries. Consequently, the possibility of poor contact between adjacent secondary batteries increases.

Further, during the manufacturing process of the cap assembly, metallic foreign matter may penetrate into the interior of the insulating layer (2). If metallic foreign matter is included inside the insulating layer (2), then when an up-down directional pressure is applied to the secondary battery, conduction may occur between the terminal plate (1) and the cap plate (3) because of the metallic foreign matter. Moreover, in the cap assembly having a multi-layer structure composed of the terminal plate (1), the insulating layer (2), and the cap plate (3), the overall thickness may be considerable. Thus, as the volume of the electrode assembly accommodated within the same size secondary battery case decreases, there is a limitation in achieving high energy density.

In the cap assembly 300 according to some embodiments of the present invention, the height of the upper surface of the cap plate 310 and the height of the upper surface of the terminal plate 320 are formed to be the same, eliminating the height difference (ΔH) shown in FIG. 3. As a result, when connecting multiple secondary batteries, the welding points between adjacent secondary batteries are aligned, ensuring ease of welding and reducing the likelihood of poor contact.

Moreover, the cap assembly 300 according to some embodiments of the present invention may be formed in a single-layer structure including the cap plate 310 and the terminal plate 320 coupled via the insulator part 330. Therefore, the overall thickness of the cap assembly 300 can be reduced, and the volume of the electrode assembly 100 accommodated inside the case 200 of the same size can be increased. Thus, the capacity of the electrode assembly 100 accommodated in the case 200 can be increased, and the energy density of the secondary battery 10 can be enhanced.

According to some embodiments, the insulator part 330 may include an insulating member 331 and a metal member 332. The insulating member 331 may contact the terminal hole 311 and the stepped portion 321. For example, the insulating member 331 may contact the step of the terminal hole 311 and the outer peripheral surface of the stepped portion 321. The insulating member 331 may be press-fitted and fixed between the terminal hole 311 and the stepped portion 321. The insulating member 331 may be located between the cap plate 310 and the terminal plate 320 so as to seal the receiving space 210.

The insulating member 331 may include an insulating material and an adhesive material. For example, the insulating member 331 may include at least one selected from the group consisting of polypropylene (PP), polyethylene (PE), polybutylene terephthalate (PBT), and mixtures thereof. Because the insulating member 331 includes an insulating material, it may provide insulation between the cap plate 310 and the terminal plate 320. Also, because the insulating member 331 includes an adhesive material, it may bond the cap plate 310 and the terminal plate 320 together.

The metal member 332 may be surrounded by the insulating member 331 so that its upper surface is exposed externally. For example, the metal member 332 may be formed in a ring shape extending along the circumferential direction of the insulating member 331. The metal member 332 may be formed of a high-rigidity metal material. Because the metal member 332 is formed of a metal material, it may relatively improve the bonding strength between the cap plate 310 and the terminal plate 320. Also, because the metal member 332 is formed in a ring shape extending along the circumferential direction of the insulating member 331, the press-fit strength of the insulating member 331 between the cap plate 310 and the terminal plate 320 may be relatively uniformly improved.

According to some embodiments, the height of the upper surface of the cap plate 310 coupled to the opening, the height of the upper surface of the metal member 332, and the height of the upper surface of the terminal plate 320 may all be the same. When the heights of the upper surfaces of the cap plate 310, the metal member 332, and the terminal plate 320 are all the same, if a plurality of secondary batteries 10 are welded via external tabs for electrical connection, weldability between adjacent secondary batteries 10 is further ensured while reducing the possibility of poor contact.

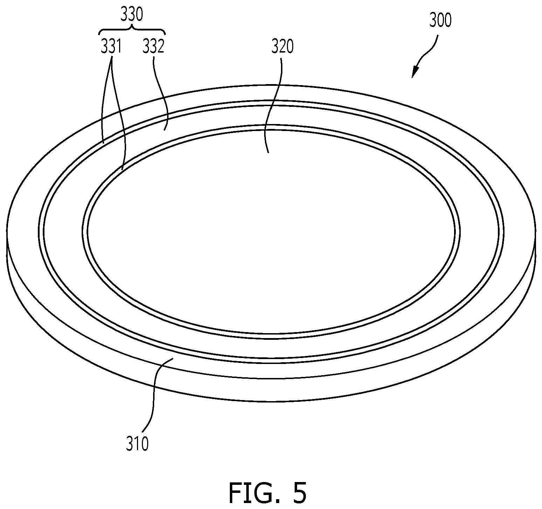

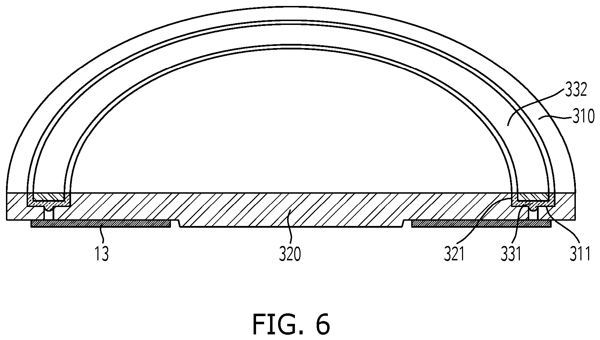

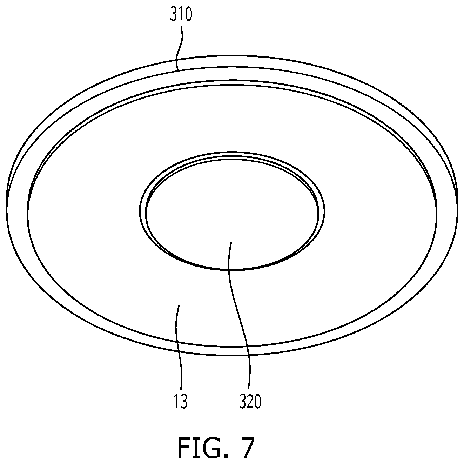

FIG. 5 illustrates a perspective view of a cap assembly according to some embodiments of the present invention, FIG. 6 is a diagram illustrating a cross-section obtained by cutting the cap assembly of FIG. 5, and FIG. 7 is a view of the cap assembly of FIG. 5 as seen from a lower side.

The cap assembly 300 in FIGS. 5 to 7 may be the same as the cap assembly 300 of the secondary battery described with reference to FIGS. 1, 2, and 4. The cap plate 310 may have a terminal hole 311. For example, the terminal hole 311 may be formed substantially at the center of the cap plate 310. The terminal hole 311 may be formed with a step. The insulating member 331 of the insulator part 330 may contact the stepped surface of the terminal hole 311.

The terminal plate 320 may include a stepped portion 321. The stepped portion 321 may be formed along the perimeter of the outer peripheral surface so as to correspond to the step of the terminal hole 311. The insulating member 331 of the insulator part 330 may contact the outer peripheral surface of the stepped portion 321. The insulator part 330 may serve as a coupling medium between the cap plate 310 and the terminal plate 320 by being located between the terminal hole 311 and the stepped portion 321.

According to some embodiments, the insulating member 331, which includes an adhesive material, may be located between the terminal hole 311 and the stepped portion 321 to couple the cap plate 310 and the terminal plate 320. Also, the insulating member 331, including an insulating material, may be located between the terminal hole 311 and the stepped portion 321 to insulate the space between the cap plate 310 and the terminal plate 320.

For example, the adhesive material of the insulating member 331 may be a thermoplastic adhesive such as a PP-based or PE-based adhesive. In some embodiments, the adhesive material of the insulating member 331 may be a thermosetting adhesive such as an epoxy-based, polyurethane-based, or acrylic-based adhesive. In some embodiments, the adhesive material of the insulating member 331 may be a mixture of a thermoplastic adhesive and a thermosetting adhesive. The adhesive material of the insulating member 331 is not particularly limited so long as it has adhesive properties.

The insulator washer 13 may be formed of an insulating material. According to some embodiments, the insulator washer 13 may be formed of a polymer material. For example, the insulator washer 13 may be formed of polyethylene terephthalate (PET) resin. The material of the insulator washer 13 is not limited thereto and may be formed of, for example, a polyester resin such as polytrimethylene terephthalate (PTT), polybutylene terephthalate (PBT), or polyethylene naphthalate (PEN).

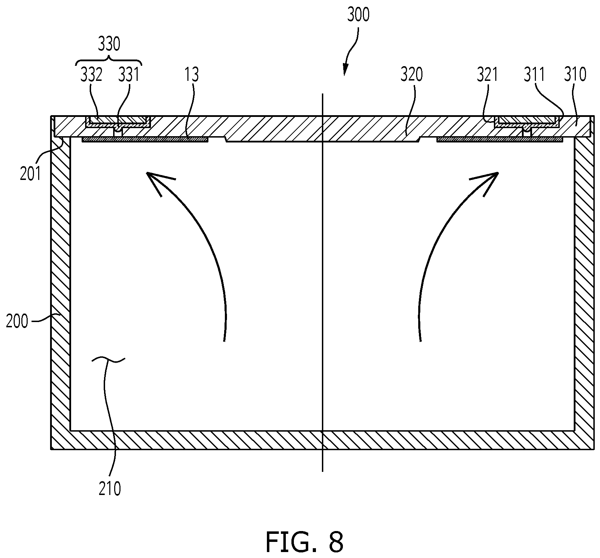

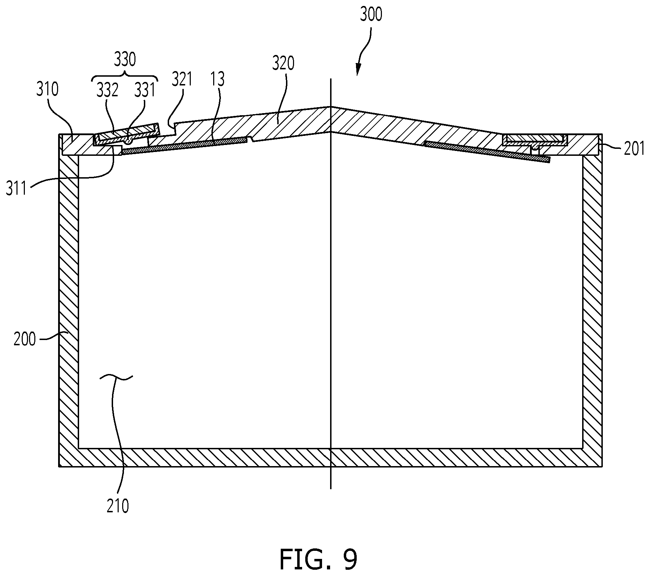

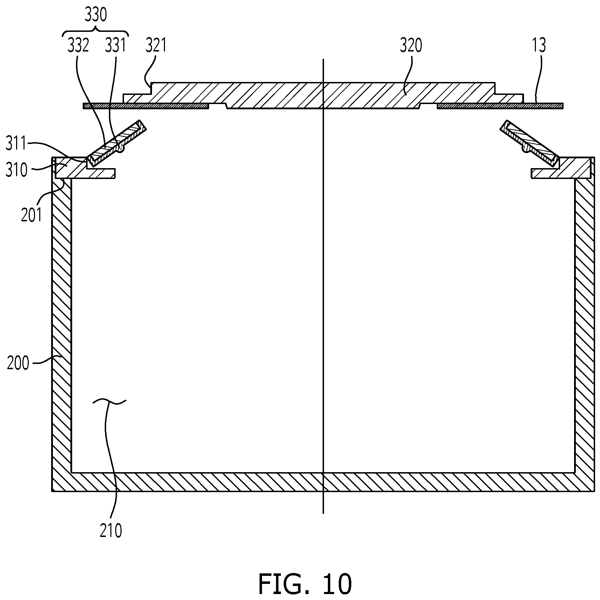

FIG. 8 is a diagram illustrating directions in which internal pressure of a receiving space acts in a cross-sectional view of a secondary battery according to some embodiments of the present invention, FIG. 9 is a diagram illustrating a state in which an insulator part is released from contact with the terminal hole and the stepped portion in the state of FIG. 8, and FIG. 10 is a diagram illustrating a state in which, from the state of FIG. 9, the terminal plate is completely released from coupling with the cap plate.

According to some embodiments, if the insulator part 330 seals the receiving space 210 and the internal pressure of the receiving space 210 is greater than or equal to a value (e.g., a set or predetermined value), at least a portion of the insulator part 330 may be released from contact with the terminal hole 311 and the stepped portion 321. Because at least a portion of the insulator part 330 is released from contact with the terminal hole 311 and the stepped portion 321 to discharge the gas in the receiving space 210 to the outside, the insulator part 330 may perform a vent function. Accordingly, upon thermal runaway of the secondary battery, gas inside the receiving space 210 may be discharged, ensuring safety.

The insulator part 330 may be located between the terminal hole 311 and the stepped portion 321 to seal the interior of the receiving space 210. The cap assembly 300 may be coupled to the opening 201 of the case 200. The cap plate 310 may be coupled to the opening 201 of the case 200, and the insulator part 330 may be coupled between the terminal hole 311 and the stepped portion 321 so as to seal the receiving space 210. The metal member 332 may be coupled to the insulating member 331 so as to increase coupling strength between the cap plate 310 and the terminal plate 320. In this state, if the secondary battery is left at a high temperature or used continuously at a high temperature or is charged or discharged with a high current, an internal gas may be generated due to degradation inside the receiving space 210.

As the internal gas generated in the receiving space 210 increases the internal pressure of the case 200, the pressure may be applied in the direction indicated by the arrow in FIG. 8. If the internal pressure of the receiving space 210 reaches a value (e.g., a set or predetermined value) or more, as shown in FIG. 9, at least a portion of the insulator part 330 may be released from contact with the terminal hole 311 and the stepped portion 321. The value (e.g., the set or predetermined value) of the internal pressure of the receiving space 210 may be a value for preventing or reducing explosion or overheating of the secondary battery. For example, the internal pressure value (e.g., the set or predetermined internal pressure value) of the receiving space 210 may be the fracture pressure of the insulator part 330. The material or physical properties of the insulating member 331 may be set so that the insulator part 330 does not rupture before the internal pressure of the secondary battery reaches the fracture pressure of the insulator part 330.

When at least a portion of the insulator part 330 is released from contact with the terminal hole 311 and the stepped portion 321 as shown in FIG. 9, the cap plate 310 on the side released from contact with the insulator part 330 may move upward relative to the side of the cap plate 310 still in contact with the insulator part 330. In this case, gas inside the receiving space 210 may be discharged through the gap between the insulating member 331 and the terminal hole 311 and between the insulating member 331 and the stepped portion 321. Thereafter, as shown in FIG. 10, the cap plate 310 may be completely released from coupling with the insulator part 330, and the sealed state of the receiving space 210 may be completely released.

For example, upon an increase in internal pressure of the secondary battery, the internal temperature of the secondary battery may rise to 200°C (or about 200°C). If the internal pressure of the receiving space 210 is greater than or equal to a value (e.g., a set or predetermined value), at least part of the insulating member 331 may melt and fracture. In this case, at least a portion of the insulator washer 13 may melt, thus opening the gap between the insulating member 331 and the terminal hole 311, and between the insulating member 331 and the stepped portion 321. In some embodiments, if the internal pressure of the receiving space 210 is greater than or equal to a value (e.g., a set or predetermined value), the insulating member 331 may be released from contact with the terminal hole 311 and the stepped portion 321 and become fractured.

According to some embodiments, the insulating member 331 may include a high heat-resistant material. A high heat-resistant material may be a material capable of maintaining its physical and chemical properties at high temperatures. For example, the high heat-resistant material may include at least one of ceramic, superalloy, heat-resistant steel, carbon material, carbon composite material, or special plastic. By configuring the insulating member 331 with a high heat-resistant material having such properties, it may be possible to prevent or reduce rupturing of the insulator part 330 prematurely if the internal temperature of the secondary battery rises before the internal pressure of the secondary battery reaches the fracture pressure of the insulator part 330.

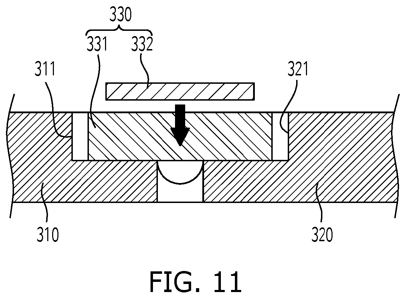

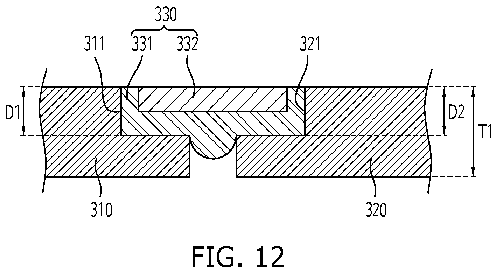

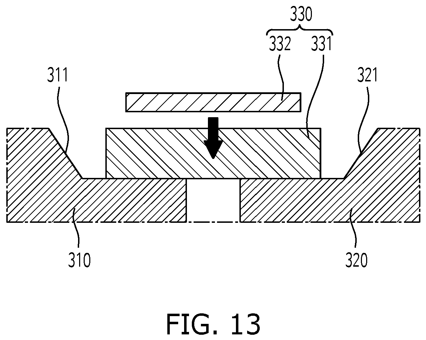

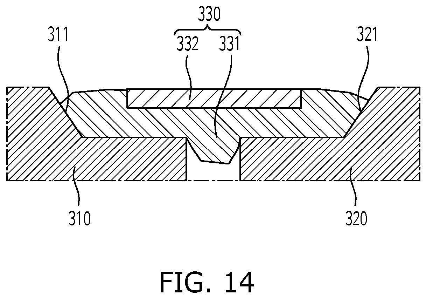

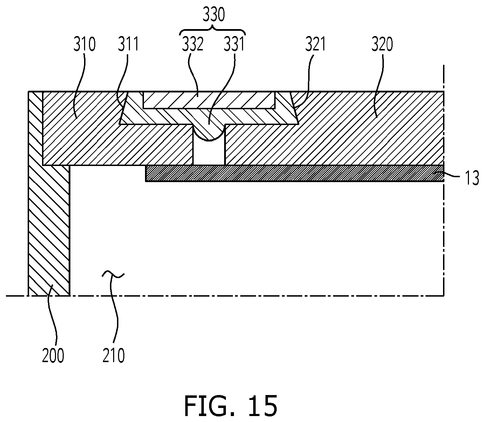

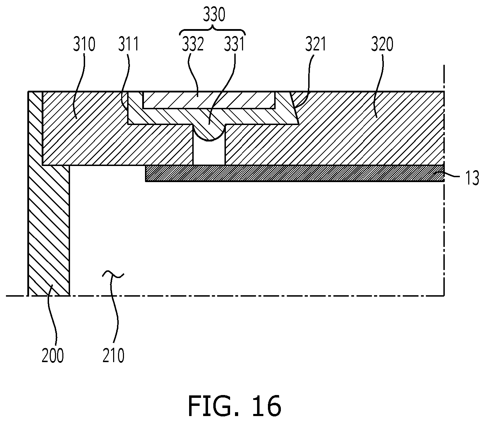

FIG. 11 is a diagram illustrating a state before an insulator part is seated in a terminal hole and a stepped portion according to some embodiments of the present invention, FIG. 12 is a diagram illustrating a state after the insulator part is seated in the terminal hole and the stepped portion of FIG. 11, FIG. 13 is a diagram illustrating a state before an insulator part is seated in a terminal hole and a stepped portion according to some embodiments of the present invention, FIG. 14 is a diagram illustrating a state after the insulator part is seated in the terminal hole and the stepped portion of FIG. 13, FIG. 15 is a diagram illustrating a terminal hole and a stepped portion according to some embodiments of the present invention, and FIG. 16 is a partial perspective view of a secondary battery to which the stepped portion of the embodiments of FIG. 15 is applied.

The insulator part 330 may be press-fitted between the terminal hole 311 and the stepped portion 321 so as to be fixed in place, according to the shape of the terminal hole 311 and the stepped portion 321. According to some embodiments, the terminal hole 311 may have a right-angled stepped cross-sectional shape. The stepped portion 321 may have a right-angled stepped cross-sectional shape. According to some embodiments, the terminal hole 311 may be inclined radially inward or outward of the case 200, and the stepped portion 321 may be inclined radially inward or outward of the case 200.

For example, the metal member 332 may press the upper surface of the insulating member 331 so as to press-fit the insulating member 331 between the terminal hole 311 and the stepped portion 321 in accordance with the shapes of the terminal hole 311 and the stepped portion 321. This may strengthen the coupling between the cap plate 310 and the terminal plate 320.

According to some embodiments, the recessed depth (D1) of the step of the terminal hole 311 and the recessed depth (D1) of the stepped portion 321 may be formed to be greater than or equal to 50% and less than or equal to 80% of the thickness (T1) of the terminal plate 320. If the recessed depth (D1) of the step of the terminal hole 311 and the recessed depth (D1) of the stepped portion 321 are formed to be less than 50% of the thickness (T1) of the terminal plate 320, the coupling force between the cap plate 310 and the terminal plate 320 may be weakened. If the recessed depth (D1) of the step of the terminal hole 311 and the recessed depth (D1) of the stepped portion 321 exceed 80% of the thickness (T1) of the terminal plate 320, the rigidity of the cap plate 310 and the terminal plate 320 on the side coupled to the insulator part 330 may not be sufficiently secured.

According to some embodiments, the thickness (T1) of the terminal plate 320 may be the overall thickness of the simplified single-layer cap assembly formed by the cap plate 310 and the terminal plate coupled via the insulator part 330. Thus, the volume of the electrode assembly that can be accommodated in the receiving space 210 of the same size secondary battery case 200 can be increased, and the energy density of the secondary battery can be enhanced.

If the internal pressure of the receiving space 210 is greater than or equal to a value (e.g., a set or predetermined value), the insulating member 331 may fracture upon being released from contact with the terminal hole 311 and the stepped portion 321. According to various embodiments of the present invention, by adjusting the shape of the terminal hole 311 and the stepped portion 321, the fracture pressure of the insulator part 330 can be relatively easily set. For example, as shown in FIG. 15, if the terminal hole 311 is inclined radially outward of the case 200 and the stepped portion 321 is inclined radially inward of the case 200, the fracture pressure of the insulator part 330 can be set higher.

As another example, as shown in FIG. 16, the terminal hole 311 can remain level while only the stepped portion 321 inclines radially inward of the case 200. In this case, when the internal pressure of the receiving space 210 becomes greater than or equal to a value (e.g., a set or predetermined value), the insulating member 331 coupled on the terminal hole 311 side may first be released from contact.

The fracture pressure of the insulator part 330 may be set differently depending on the size and shape of the secondary battery. If the internal pressure of the receiving space 210 is greater than or equal to a value (e.g., a set or predetermined value), at least a portion of the insulator washer 13 may melt, thus opening a space between the insulating member 331 and the terminal hole 311, and between the insulating member 331 and the stepped portion 321.

Accordingly, in the present invention, by adjusting the shape of the terminal hole 311 and the stepped portion 321, it is possible to adjust the time or location at which the gas inside the receiving space 210 is discharged upon fracture of the insulator part 330.

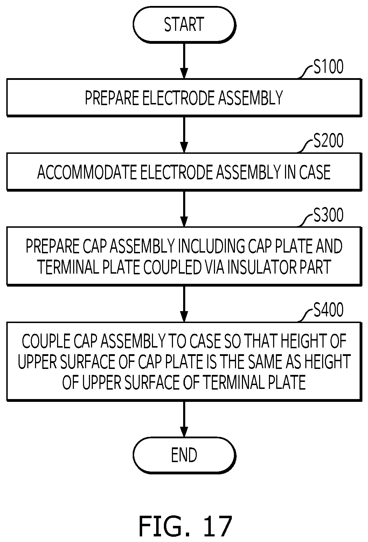

FIG. 17 is a flowchart illustrating aspects of a method of manufacturing a secondary battery according to some embodiments of the present invention. Although FIG. 17 illustrates various operations in a method of manufacturing a secondary battery according to some embodiments, embodiments according to the present invention are not limited thereto, and according to various embodiments, the method may include additional operations, or fewer operations, or the order of operations may vary, unless otherwise stated or implied, without departing from the spirit and scope of embodiments according to the present invention.

Referring to FIG. 17, a method of manufacturing a secondary battery according to the present invention includes: preparing an electrode assembly (S100), accommodating the electrode assembly in a case (S200), preparing a cap assembly (S300), and coupling the cap assembly to the case (S400).

First, the method of manufacturing a secondary battery may start by preparing the electrode assembly (S100). Preparing the electrode assembly (S100) may be an operation of preparing an electrode assembly configured by winding a first electrode, a second electrode, and a separator interposed between the first electrode and the second electrode. After preparing the electrode assembly (S100), the operation (S200) of accommodating the electrode assembly in the case may be performed.

The operation (S200) of accommodating the electrode assembly may be an operation of accommodating the electrode assembly in a case having an opening formed on one side. The opening formed on one side of the case may be configured to accommodate the electrode assembly, and the interior space may accommodate the electrode assembly and an electrolyte. After the operation (S200) of accommodating the electrode assembly is performed, the operation (S300) of preparing the cap assembly may be carried out. The operation (S300) of preparing the cap assembly may also be carried out before the operations (S100) and (S200).

The operation (S300) of preparing the cap assembly may be a operation of coupling, via an insulator part, a cap plate that includes a terminal hole formed with a step and a terminal plate that is electrically connected to the first electrode. The terminal plate may include a stepped portion formed along the perimeter of its outer peripheral surface so that the insulator part contacts the stepped portion and so that the stepped portion corresponds to the step of the terminal hole. The insulator part may include an insulating member contacting the terminal hole and the stepped portion, and a metal member surrounded by the insulating member so that the upper surface of the metal member is exposed externally.

According to some embodiments, preparing the cap assembly (S300) may include an operation of press-fitting and fixing the insulator part between the terminal hole and the stepped portion. Also, preparing the cap assembly (S300) may include an operation of, with the insulating member in contact with the terminal hole and the stepped portion, pressing the upper surface of the metal member so as to compress the insulating member toward the electrode assembly.

The operation (S400) of coupling the cap assembly to the case may be an operation of coupling the cap assembly to one side of the case so that the height of the upper surface of the cap plate coupled to the opening is the same as the height of the upper surface of the terminal plate. In the operation (S400) of coupling the cap assembly to the case, the cap assembly may be coupled to one side of the case. In some embodiments, the cap assembly may be coupled to one side of the case to seal the opening.

According to some embodiments, the operation (S400) of coupling the cap assembly may include locating the insulator part between the cap plate and the terminal plate so as to seal the receiving space. After the operation (S400) of coupling the cap assembly to the case, if the insulator part seals the receiving space and the internal pressure of the receiving space is greater than or equal to a value (e.g., a set or predetermined value), the method may further include releasing at least a portion of the insulator part from contact with the terminal hole and the stepped portion.

According to some embodiments, the operation (S400) of coupling the cap assembly may include coupling the cap plate to the opening so that the height of the upper surface of the cap plate, the height of the upper surface of the metal member, and the height of the upper surface of the terminal plate are the same. Accordingly, the overall height difference of the secondary battery can be eliminated by forming the heights of the upper surfaces of the cap plate, the metal member, and the terminal plate to be the same. As a result, when multiple secondary batteries are welded, the weld height of adjacent secondary batteries is the same, thereby ensuring weldability and reducing the possibility of poor contact.

The flowchart of FIG. 17 and the above description are only an example of the present invention, and the scope of the present invention is not limited thereto. For example, one or more operations in the flowchart or the above description may be added, changed, or omitted, one or more operations may be performed in a different order, or one or more operations may be performed simultaneously or concurrently.

Although aspects of some embodiments of the present invention have been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

### Description of Some of the Reference Symbols

10: secondary battery
100: electrode assembly
200: case
201: opening
210: receiving space
300: cap assembly
310: cap plate
311: terminal hole
320: terminal plate
321: stepped portion
330: insulator part
331: insulating member
332: metal member

## Claims

1. A secondary battery (10) comprising:
an electrode assembly (100) comprising a first electrode (110), a second electrode (120), and a separator (130) interposed between the first electrode (110) and the second electrode (120), the first electrode (110), the second electrode (120), and the separator (130) being wound to form the electrode assembly (100);
a case (200) having an opening (201) formed on one side and forming a receiving space (210) in which the electrode assembly (100) is accommodated; and
a cap assembly (300) coupled to the one side of the case (200) to seal the opening (201),
wherein the cap assembly (300) comprises:
a cap plate (310) coupled to the opening (201) and comprising a terminal hole (311) formed with a step; and
a terminal plate (320) coupled to the terminal hole (311) via an insulator part (330) and electrically connected to the first electrode (110), and
a height of an upper surface of the cap plate (310) coupled to the opening (201) is a same as a height of an upper surface of the terminal plate (320).

2. The secondary battery 10 as claimed in claim 1, wherein the terminal plate (320) comprises a stepped portion (321) contacting the insulator part (330) and formed along a perimeter of an outer peripheral surface so as to correspond to the step of the terminal hole (311).

3. The secondary battery (10) as claimed in claim 2, wherein the insulator part (330) is press-fitted between the terminal hole (311) and the stepped portion (321) so as to be fixed in place.

4. The secondary battery (10) as claimed in any of the preceding claims,
wherein the insulator part (330) is between the cap plate (310) and the terminal plate (320) so as to seal the receiving space 210.

5. The secondary battery (10) as claimed in any of the preceding claims,
wherein the terminal hole (311) is inclined radially inward or outward of the case (200).

6. The secondary battery (10) as claimed in any of the claims 2 to 5,
wherein the stepped portion (321) is inclined radially inward or outward of the case (200).

7. The secondary battery (10) as claimed in any of the claims 2 to 6, wherein, based on the insulator part (330) sealing the receiving space (210) and an internal pressure of the receiving space (210) being greater than or equal to a predetermined value, at least a portion of the insulator part (330) is configured to be released from contact with the terminal hole (311) and the stepped portion (321).

8. The secondary battery (10) as claimed in any of the claims 2 to 7,
wherein a recessed depth of the step of the terminal hole (311) and a recessed depth of the stepped portion (321) are greater than or equal to 50% and less than or equal to 80% of a thickness of the terminal plate (320).

9. The secondary battery (10) as claimed in any of the claims 2 to 8, wherein the insulator part (330I comprises:
an insulating member (331) contacting the terminal hole (311) and the stepped portion (321); and
a metal member (332) surrounded by the insulating member (331) so that an upper surface of the metal member (332) is exposed externally.

10. The secondary battery (10) as claimed in claim 9, wherein a height of an upper surface of the cap plate (310) coupled to the opening (201), a height of an upper surface of the metal member (332), and a height of an upper surface of the terminal plate (320) are equal.

11. The secondary battery (10) as claimed in claim 9 or 10, wherein the metal member (332) is formed of a ring shape extending in a circumferential direction of the insulating member (331).

12. The secondary battery (10) as claimed in any of the claims 9 to 11,
wherein the insulating member (331) comprises at least one selected from the group consisting of polypropylene (PP), polyethylene (PE), polybutylene terephthalate (PBT), and mixtures thereof.

13. A method of manufacturing a secondary battery (10) comprising:
preparing an electrode assembly (100) by winding a first electrode (110), a second electrode (120), and a separator (130) between the first electrode (110) and the second electrode (120);
accommodating the electrode assembly (100) in a receiving space (210) of a case (200) having an opening (201) formed on one side;
preparing a cap assembly (300) by coupling, via an insulator part (330), a cap plate (310) comprising a terminal hole (311) formed with a step and a terminal plate (320) electrically connected to the first electrode (110); and
coupling the cap assembly (300) to the one side of the case (200) so that a height of an upper surface of the cap plate (310) coupled to the opening (201) is equal to a height of an upper surface of the terminal plate (320).

14. The method of manufacturing a secondary battery (10) as claimed in claim 13, wherein the terminal plate (320) comprises a stepped portion (321) in contact with the insulator part (330) and formed along a perimeter of an outer peripheral surface so as to correspond to the step of the terminal hole (311).

15. The method of manufacturing a secondary battery (10) as claimed in claim 14, wherein preparing the cap assembly (300) comprises press-fitting and fixing the insulator part (330) between the terminal hole (311) and the stepped portion (321).
